# EUROPEAN PATENT APPLICATION

(11) **EP 4 738 482 A1**
(43) Date of publication of application: **06.05.2026**
(21) Application number: 24832146.5
(22) Date of filing: 28.06.2024
(51) Int. Cl.: H01M 4/96, B01J 21/18, B01J 23/42, B01J 32/00, C01B 32/30, H01M 8/10

(54) **CARBON MATERIAL FOR CATALYST CARRIER OF SOLID POLYMER FUEL CELL, CATALYST LAYER FOR SOLID POLYMER FUEL CELL, AND FUEL CELL**

(30) Priority: 30.06.2023 JP 2023108951
(71) Applicant: NIPPON STEEL CHEMICAL & MATERIAL CO., LTD., Tokyo 103-0027 (JP)
(72) Inventor: MASAKI, Kazuyoshi, Tokyo 103-0027 (JP); TADOKORO, Kenichiro, Tokyo 103-0027 (JP); DAITO, Noboru, Tokyo 103-0027 (JP); IIJIMA, Takashi, Tokyo 100-8071 (JP); NEGI, Noriyuki, Tokyo 100-8071 (JP); SHIMIZU, Takayuki, Tokyo 103-0027 (JP)
(74) Representative: SONN Patentanwälte GmbH & Co KG
(86) International application number: PCT/JP2024/023653
(87) International publication number: WO 2025/005290

(57) **Abstract**

A carbon material for a catalyst carrier of a solid polymer fuel cell, the carbon material including porous activated carbon black satisfying requirements (A) to (C):
(A) a BET specific surface area is from 350 m²/g to 800 m²/g,
(B) a value (VD₅₋₂₀/VA₂₀) obtained by dividing a pore volume VD₅₋₂₀ exhibited by a pore having a pore size of from 5 nm to 20 nm, as determined by analysis of a nitrogen desorption isotherm with a DH (Dollimore-Heal) method, by a pore volume VA₂₀ exhibited by a pore having a pore size of 20 nm or less, as determined by analysis of a nitrogen adsorption isotherm with a DH method, is 0.35 or less, and
(C) a temperature Td_{10%} at a reduction in weight of 10% in temperature rise at 10°C/min in an air atmosphere in thermogravimetry-differential thermal analysis is from 620 to 680°C.

## Description

### Technical Field

The present disclosure relates to a carbon material for a catalyst carrier of a solid polymer fuel cell, a catalyst layer for a solid polymer fuel cell, and a fuel cell.

### Background Art

A solid polymer fuel cell which is one of fuel batteries includes paired catalyst layers placed on both surfaces of a solid polymer electrolyte membrane, a gas diffusion layer placed outside each of the catalyst layers, and a separator placed outside such each. One catalyst layer of the paired catalyst layers serves as an anode of the solid polymer fuel cell and the other catalyst layer serves as a cathode of the solid polymer fuel cell. In a usual solid polymer fuel cell, plural unit cells each having the above constituent components are stacked in order to obtain the desired output.

A reducing gas such as hydrogen is introduced into the separator on the anode side. The gas diffusion layer on the anode side allows the reducing gas to be diffused and then introduced into the anode. The anode includes a catalyst component, a catalyst carrier carrying a catalyst for a fuel cell, and an electrolyte material (ionomer) having proton conductivity. The catalyst carrier is often constituted from a carbon material. The oxidation reaction of the reducing gas occurs to generate protons and electrons on the catalyst component. For example, in a case in which the reducing gas is a hydrogen gas, the following oxidation reaction occurs.

H₂ → 2H⁺ + 2e⁻ (E₀ = 0 V)

The protons generated in the oxidation reaction are introduced into the cathode through the electrolyte material in the anode and the solid polymer electrolyte membrane. The electrons are introduced into an external circuit through the catalyst carrier, the gas diffusion layer, and the separator. The electrons are worked (generate electricity) in an external circuit, and then introduced into the separator on the cathode side. The electrons are then introduced into the cathode through the separator on the cathode side and the gas diffusion layer on the cathode side.

The solid polymer electrolyte membrane is constituted from an electrolyte material having proton conductivity. The solid polymer electrolyte membrane introduces the protons generated in the oxidation reaction, into the cathode.

An oxidizing gas such as an oxygen gas or air is introduced into the separator on the cathode side. The gas diffusion layer on the cathode side allows the oxidizing gas to be diffused and then introduced into the cathode. The cathode includes a catalyst component, a catalyst carrier carrying the catalyst component, and an electrolyte material (ionomer) having proton conductivity. The catalyst carrier is often constituted from a carbon material. The reduction reaction of the oxidizing gas occurs to generate water on the catalyst component. For example, in a case in which the oxidizing gas is an oxygen gas or air, the following reduction reaction occurs.

O₂ + 4H⁺ + 4e⁻ → 2H₂O (E₀ = 1.23 V)

The water generated in the reduction reaction is discharged together with the unreacted oxidizing gas, outside the fuel cell. Thus, the solid polymer fuel cell generates electricity by use of the difference in energy (difference in potential) between the oxidation reaction and the reduction reaction. In other words, the electrons generated in the oxidation reaction work in the external circuit.

Meanwhile, use of porous carbon black in catalyst carriers has been conventionally proposed from the viewpoint of electricity generation performance of fuel batteries.

Non-Patent Literature 1 reports that a catalytic metal carried in a pore formed inside of porous carbon black does not receive reaction inhibition (poisoning) due to covering with a co-existing ionomer and thus is highly active.

Patent Literature 1 proposes porous carbon black having an average particle size of from 20 to 100 nm, in which the volume of a hole having a hole diameter of from 4 to 20 nm in the porous carbon black is from 0.23 to 0.78 cm³/g.

Patent Literature 2 proposes a method including contacting a carbon black starting material and an oxidant in a fluidized bed, as a method including making carbon black porous to increase the surface area. Specifically, Patent Literature 2 proposes "A method of producing graphitized carbon high in surface area, the method including an oxidation step and a graphitization step of a starting carbon material in order to produce area graphitized carbon high in surface area, having a larger surface area by at least 100 m²/g than the surface area of the starting carbon material, in which the oxidation is performed before the graphitization, carbon high in surface area is produced by the oxidation, and the average hole volume of the graphitized carbon high in surface area is at least 1.32 cc/g".

Conventionally, high crystallization of porous carbon black by firing has been proposed from the viewpoint of duration performance of a fuel cell.

Patent Literature 3 proposes high-crystalline carbon black having a BET specific surface area of from 300 to 700 m²/g and a crystallite size Lc of 2.0 nm or more in order to impart durability.

Patent Literature 4 proposes porous carbon in which the Lc (002) is 2.0 nm or more, the ratio D/G of the peak area of a D1-band (1350 cm⁻¹) with respect to the peak area of a G-band (1590 cm⁻¹) in a spectrum of a carbon surface by a Raman spectrometric method is from 0.5 to 2.5, the porous carbon has a pore including a mesopore, and the mesopore volume is from 0.35 to 1.3 cm³/g.

Conventionally, a technique has also been proposed in which raw material carbon black is activated to provide porous carbon black.

Patent Literature 5 proposes a method including making carbon black porous by air activation after heat treatment.

Patent Literature 6 proposes a method including subjecting carbon black to carrying of a catalytic metal and then CO₂ activation.

Patent Literature 7 proposes a method including controlling a moiety covered with an ionomer, by subjecting carbon black to air activation and changing a pore volume of from 5 nm to 40 nm.
Patent Literature 1: Japanese Patent Application Laid-Open (JP-A) No. 2013-109856
Patent Literature 2: Japanese Patent Publication (JP-B) No. 5650542
Patent Literature 3: JP-B No. 6478677
Patent Literature 4: WO17/208742
Patent Literature 5: JP-B No. 6563945
Patent Literature 6: JP-B No. 5326585
Patent Literature 7: JP-B No. 6772952

Non-Patent Literature 1: Kongkanand et al., ACS Energy Lett. 2018, 3, 618-621

### SUMMARY OF INVENTION

### Technical Problem

Meanwhile, porous carbon black as a carbon material for a catalyst carrier in a solid polymer fuel cell is demanded to have not only durability, but also low-load characteristics (characteristics in electricity generation at low current) as electricity generation performance.

However, porous carbon black according to conventional techniques including those in all documents described above has not been still sufficient in terms of achievement of both high durability and low-load characteristics.

For example, in Patent Literature 5, activation treatment is carried out after heat treatment. Since a highly crystalline carbon wall heat-treated is activated, the effect of activation is low and an enhancement in pore volume is not sufficient. Additionally, air is used as the activation gas, thus a combustion reaction occurs on a carbon black surface, thereby resulting in formation of a pore large in pore size, and therefore a structure is caused in which an ionomer easily penetrates into a particle. As a result, enhancements in low-load characteristics are not sufficient.

In Patent Literature 6, a catalytic metal carried also acts as an activation catalyst and thus a site at which a catalyst is carried is selectively activated. As a result, a catalyst particle is present on a carbon surface, and this technique is not sufficient in terms of prevention of poisoning of the catalyst by an ionomer.

Patent Literature 7 describes control of a covering site of an ionomer by a change in pore volume from 5 nm to 40 nm, a pore volume obtained by analysis of a nitrogen adsorption/desorption isotherm on the adsorption side is not singly sufficient for expressing the circumstance of communication between the particle inside and outside and cannot be said to be optimal as an index of acceptability of penetration of an ionomer.

In Patent Literature 2, a carbon black starting material having a first BET nitrogen surface area and an oxidant are contacted in a fluidized bed under a condition effective for production of a carbon black product having a second BET nitrogen surface area larger than the first BET nitrogen surface area, whereby the oxidant and the carbon black are reacted for pore making in the fluidized bed. However, in a case in which carbon black distributed in terms of particle size is used in the fluidized bed, distribution is caused in the relevant flowing state, thereby resulting in the occurrence of distribution in terms of the degree of progress of activation.

An object of the disclosure is then to provide a carbon material for a catalyst carrier of a solid polymer fuel cell, in which both high durability and low-load characteristics are achieved, as well as a catalyst layer for a solid polymer fuel cell, and a fuel cell, in which the carbon material is utilized.

### Solution to Problem

Solutions for solving the problems include the following aspects.
<1> A carbon material for a catalyst carrier of a solid polymer fuel cell, the carbon material including porous activated carbon black satisfying the following requirements (A), (B), and (C):
   (A) a BET specific surface area is from 350 m²/g to 800 m²/g,
   (B) a value (VD₅₋₂₀/VA₂₀) obtained by dividing a pore volume VD₅₋₂₀ exhibited by a pore having a pore size of from 5 nm to 20 nm, as determined by analysis of a nitrogen desorption isotherm with a DH (Dollimore-Heal) method, by a pore volume VA₂₀ exhibited by a pore having a pore size of 20 nm or less, as determined by analysis of a nitrogen adsorption isotherm with a DH (Dollimore-Heal) method, is 0.35 or less, and
   (C) a temperature Td_{10%} at a reduction in weight of 10% in temperature rise at 10°C/min in an air atmosphere in thermogravimetry-differential thermal analysis (TG-DTA) is from 620 to 680°C.
<2> The carbon material for a catalyst carrier of a solid polymer fuel cell according to <1>, wherein the pore volume VA₂₀ is from 0.36 to 0.90 mL/g.
<3> A catalyst layer for a solid polymer fuel cell, the catalyst layer including the carbon material for a catalyst carrier of a solid polymer fuel cell according to <1> or <2>.
<4> A fuel cell including the catalyst layer for a solid polymer fuel cell according to <3>.
<5> The fuel cell according to <4>, wherein the catalyst layer for a solid polymer fuel cell is a catalyst layer on a cathode side.

### Advantageous Effects of Invention

According to the disclosure, a carbon material for a catalyst carrier of a solid polymer fuel cell, in which both high durability and low-load characteristics are achieved, as well as a catalyst layer for a solid polymer fuel cell, and a fuel cell, in which the carbon material is utilized are provided.

### BRIEF DESCRIPTION OF DRAWING

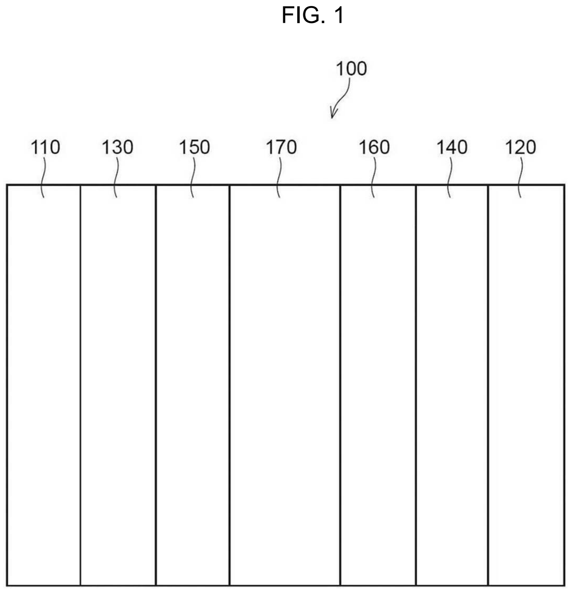

[FIG. 1] FIG. 1 is a schematic view illustrating one example of an outline configuration of the fuel cell of the disclosure.

### DESCRIPTION OF EMBODIMENTS

A numerical value range represented by "(from) ... to ..." in the disclosure means that the range encompasses respective numerical values described before and after "to" as a lower limit and an upper limit. A numerical value range in the case of "more than" or "less than" attached to a numerical value described before or after "to" means that such a numerical value is not included as a lower limit value or an upper limit value.

The term "step" in the disclosure encompasses not only an independent step, but also a step that can achieve a predetermined object even in the case of being not clearly distinguished from other steps.

In the disclosure, the "electrolyte material having proton conductivity" used in the catalyst layer of the fuel cell is also referred to as "ionomer".

### <Carbon Material for Catalyst Carrier of Solid Polymer Fuel Cell>

The carbon material for a catalyst carrier of a solid polymer fuel cell of the disclosure includes porous activated carbon black satisfying requirements (A), (B), and (C) described later.

The porous activated carbon black here means carbon black made porous by activation. The porous activated carbon black is also referred to as "porous carbon black".

The carbon material for a catalyst carrier of the disclosure is a carbon material satisfying both high durability and low-load characteristics. The carbon material of the disclosure has been found based on the following findings.

In recent years, a demand for transfer to fuel batteries has increased in the field of heavy-duty vehicles (hereinafter, also referred to as "HDVs") with large CO₂ emissions, according to an increased interest in carbon neutrality. Since HDVs are demanded to have high durability as compared with passenger vehicles, not only catalyst carriers are demanded to have higher durability in electricity generation, but also materials are demanded to be inexpensive in HDVs mainly utilized in commercial vehicle applications.

It has been found that, in a case in which a porous carbon material having a mesopore inside, for example, a dendritic carbon material, Ketjen black, or Cnovel, as obtained by a self-decomposition reaction of silver acetylide, is used as a carbon material for a catalyst carrier, a catalyst carried by such a mesopore inside is prevented from being poisoned by an ionomer and thus is enhanced in activity and enhanced in low-load characteristics. However, such a porous carbon material is expensive, and thus it is effective in terms of cost reduction to adopt porous carbon black in which carbon black as an inexpensive raw material is made porous by activation.

However, porous carbon black does not currently sufficiently achieve both high durability and low-load characteristics.

The present inventors have made studies about characteristics associated with achievement of both high durability and low-load characteristics of porous carbon black, and have obtained the following findings.
(1) It is important to "control activation" so that "specific surface area", "adsorption volume at a size of up to 20 nm", and "desorption pore volume at a size of from 5 to 20 nm" are respectively simultaneously in suitable ranges.
(2) Control of activation is effective in activation high in uniformity of the degree of activation (specifically, for example, activation with reversal of the flow direction of an activation gas flowing in raw material carbon black).
(3) An increase in average pore volume is possible by activation for an increase in uniformity of the degree of activation without excess activation and thus production of any porous carbon black in which a pore connecting the inside and the outside is broadened.
(4) Thus, a space in which a catalytic metal is carried is sufficiently present inside of porous carbon black, a pore connecting the inside and the outside of the porous carbon black is narrow, and poisoning of the catalytic metal by an ionomer can be prevented, whereby a decrease in catalyst activity is suppressed and also decreases in low-load characteristics are also suppressed.
(5) It is important in terms of durability to "control heating treatment" so that the "temperature Td_{10%} at a reduction in weight of 10% by TG-DTA measurement" is in an appropriate range.

It has been found from the above findings that the carbon material for a catalyst carrier of the disclosure is a carbon material satisfying both high durability and low-load characteristics.

Hereinafter, requirements (A), (B), and (C) are described.

### (Requirement (A))

### (A) The BET specific surface area is from 350 m²/g to 800 m²/g.

A BET specific surface area of porous carbon black of from 350 m²/g to 800 m²/g is preferred because a catalytic metal carried can be carried in a well-dispersed manner at objective carrying rate and particle size falling within practical ranges and porous carbon black can take a crystallite structure necessary for obtaining durability demanded in a fuel cell.

A BET specific surface area of porous carbon black of less than 350 m²/g leads to an increase in catalytic metal particle size and aggregation of catalytic metal particles at an increased carrying rate of a catalytic metal, thereby hardly allowing high cell performance to be obtained.

A BET specific surface area of porous carbon black of 800 m²/g or more, although allows high electricity generation performance to be obtained, tends not to allow a crystallite structure necessary for allowing porous carbon black to keep durability to be obtained, thereby making achievement of both high durability and low-load characteristics difficult.

The BET specific surface area of porous carbon black is preferably from 350 m²/g to 600 m²/g.

The BET specific surface area is a value measured by a method described in Examples below.

### (Requirement (B))

(B) The value (VD₅₋₂₀/VA₂₀) obtained by dividing the pore volume VD₅₋₂₀ exhibited by a pore having a pore size of from 5 nm to 20 nm, as determined by analysis of a nitrogen desorption isotherm with a DH (Dollimore-Heal) method, by the pore volume VA₂₀ exhibited by a pore having a pore size of 20 nm or less, as determined by analysis of a nitrogen adsorption isotherm with a DH (Dollimore-Heal) method, is 0.35 or less.

The value (VD₅₋₂₀/VA₂₀) of porous carbon black represents the degree of uniformity of the degree of activation of porous carbon black.

In a case in which the value (VD₅₋₂₀/VA₂₀) of porous carbon black is more than 0.35, uniformity of the degree of activation is inferior, and porous carbon black, in which a pore connecting the inside and the outside thereof is excessively increased, is increased. Thus, an ionomer penetrates inside of porous carbon black and low-load characteristics decrease.

In other words, the BET specific surface area is from 350 m²/g to 800 m²/g and the value (VD₅₋₂₀/VA₂₀) of porous carbon black is 0.35 or less, whereby a space in which a catalytic metal is carried is sufficiently present inside of porous carbon black and a pore connecting the inside and the outside of porous carbon black is narrower. Thus, poisoning of the catalytic metal by an ionomer can be prevented and thus a decrease in catalyst activity is suppressed. As a result, decreases in low-load characteristics are suppressed.

The value (VD₅₋₂₀/VA₂₀) of porous carbon black is preferably 0.30 or less.

In this regard, the lower limit of the value (VD₅₋₂₀/VA₂₀) of porous carbon black is, for example, 0.10 or more from the viewpoints of oxygen gas feeding to a mesopore located inside and discharge of water produced.

The pore volume VD₅₋₂₀ of porous carbon black is represents the amount of a pore connecting the inside and the outside of porous carbon black, and represents ease of penetration of an ionomer inside of porous carbon black.

The pore volume VD₅₋₂₀ of porous carbon black is preferably 0.4 mL/g or less, more preferably 0.3 mL/g.

In a case in which the pore volume VD₅₋₂₀ of porous carbon black is 0.4 mL/g or less, uniformity of the degree of activation is enhanced and a pore connecting the inside and the outside of porous carbon black is inhibited from being excessively increased. Thus, an ionomer hardly penetrates inside of porous carbon black, and low-load characteristics are enhanced.

The lower limit of the pore volume VD₅₋₂₀ of porous carbon black is, for example, 0.05 mL/g or more from the viewpoints of oxygen gas feeding to a mesopore inside of porous carbon black and discharge of water produced.

In this regard, the pore volume VA₂₀ of porous carbon black represents the volume of a pore inside of porous carbon black.

The pore volume VA₂₀ of porous carbon black is preferably from 0.36 to 0.90 mL/g, more preferably from 0.39 to 0.61 mL/g.

In a case in which the pore volume VA₂₀ of porous carbon black is 0.36 mL/g or more, the inside volume of porous carbon black is sufficiently ensured and the amount of a catalytic metal carried inside of porous carbon black increases. Thus, the catalytic metal is less poisoned by an ionomer, and low-load characteristics are enhanced.

In a case in which the pore volume VA₂₀ of porous carbon black is 0.9 mL/g or less, not only the volume of a pore inside of porous carbon black is large and uniformity of the degree of activation is ensured, but also porous carbon black has sufficient intensity, and thus is inhibited from collapsing. Thus, durability is enhanced.

The pore volume VD₅₋₂₀ and the pore volume VA₂₀ are each a value measured by a method described in Examples below.

### (Requirement (C))

(C) The temperature Td_{10%} at a reduction in weight of 10% in temperature rise at 10°C/min in an air atmosphere in thermogravimetry-differential thermal analysis (TG-DTA) is from 620 to 680°C.

In a case in which the temperature Td_{10%} at a reduction in weight of 10% of the porous carbon black is less than 620°C, porous carbon black is high in oxidative consumption ability and sufficient durability cannot be secured.

In a case in which the temperature Td_{10%} at a reduction in weight of 10% of the porous carbon black is more than 680°C, the surface area of the porous carbon black decreases, and low-load characteristics decrease.

The temperature Td_{10%} at a reduction in weight of 10% of the porous carbon black is preferably from 640 to 680°C.

The temperature Td_{10%} at a reduction in weight of 10% is a value measured by a method described in Examples below.

### <Method of Producing Carbon Material for Catalyst Carrier of Solid Polymer Fuel Cell>

Hereinafter, one example of the method of producing the carbon material for a catalyst carrier of a solid polymer fuel cell of the disclosure (hereinafter, also referred to as "method of producing the carbon material") is described.

The method of producing the carbon material of the disclosure is a method in which raw material carbon black is treated in the order of "first activation step", "heating treatment step", and "second activation step" and activation with reversal of the flow direction of an activation gas flowing in the raw material carbon black is performed in the "first activation step".

According to the method of producing the carbon material of the disclosure, a carbon material (namely, porous activated carbon black) satisfying the requirement (A) to the requirement (C) is obtained.

### (First Activation Step)

In the first activation step, activation is performed with reversal of the flow direction of an activation gas flowing in raw material carbon black. The flow direction of the activation gas may be reversed repeatedly once, or twice or more.

The flow direction of the activation gas is reversed, whereby the difference in degree of activation, occurring between raw material carbon black upstream of an activation gas flow path and raw material carbon black downstream of the activation gas flow path, can be suppressed. In other words, uniformity of the degree of activation of porous carbon black can be enhanced.

Examples of the raw material carbon black include furnace black produced by continuously pyrolyzing a gaseous or liquid raw material in a reaction furnace; channel black produced by combusting a raw material gas and applying the flame to a channel steel bottom surface to perform quenching and precipitation: thermal black produced by periodically repeating combustion and pyrolysis with a gas as a raw material: and acetylene black with an acetylene gas as a raw material. The raw material carbon black is preferably furnace black from the viewpoint of ease of production of a particle inside pore by activation and an appropriate primary particle size for a catalyst carrier of a solid polymer fuel cell.

Such carbon black can be used singly or in combination of two or more kinds thereof, and is preferably used singly from the viewpoint of allowing activation to uniformly progress.

### (Heating Treatment Step)

In the heating treatment step performed after the first activation step, heat treatment is performed under an inert atmosphere, thereby growing a crystallite constituting the raw material carbon black undergoing the first activation step, and imparting durability demanded in a fuel cell. The heating treatment step is performed, whereby the temperature Td_{10%} at a reduction in weight of 10% of porous carbon black is kept high, and oxidation resistance (namely, durability) can be enhanced.

In the heating treatment step, the raw material carbon black undergoing the first activation step is heat-treated at a temperature of from 1500°C to 1900°C (preferably from 1600 to 1800°C) in vacuum or in an inert gas (nitrogen, argon, or the like) atmosphere.

Such heating treatment at 1500°C or more allows for development of a carbon crystal high in aromaticity, for formation of a backbone of porous carbon black, and also allows a pore wall to be sufficiently thick, and thus porous carbon black satisfying the requirement (C) is obtained.

Such heating treatment at 1900°C or less inhibits the pore volume of a mesopore from decreasing due to progress of excess crystallization of carbon.

### (Second Activation Step)

In the second activation step, activation is performed which includes again opening a pore clogged in the heating treatment step, of a heat-treated activated carbon black intermediate. Thus, the specific surface area and the pore volume decreased in the heating treatment step are increased. In a case in which the second activation step is not performed, sufficient specific surface area and pore volume are hardly obtained.

It is preferable also in the second activation step to perform activation under reversal of the flow direction of the activation gas flowing in raw material carbon black.

The first activation step and the second activation step are undergone, whereby porous carbon black is obtained inside which a space in which a catalytic metal is carried is sufficiently present, in which a pore connecting the inside and the outside is narrow, and which satisfies the requirement (A) to the requirement (B).

### (Modes of Activation in First Activation Step and Second Activation Step)

The type of the activation gas in each of the first activation step and the second activation step is not particularly limited as long as such a gas contains a gas capable of oxidatively consuming carbon constituting raw material carbon black by a reaction. Examples of the gas capable of oxidatively consuming carbon constituting raw material carbon black by a reaction can include air, oxygen, ozone, water vapor, carbon dioxide, nitrogen dioxide, nitrogen monoxide, and dinitrogen monoxide. Such gases may be mixed and the mixture may be adopted as the activation gas. A gas diluted with an inert gas such as nitrogen, argon, or helium may also be adopted. An exhaust gas or an industrial gas containing such gas(es) may also be adopted. A preferred activation gas contains water vapor or carbon dioxide, or such gas(es). The type of the gas in the first activation step may be different from that in the second activation step.

The activation apparatus applicable in the first activation step and the second activation step can be any of various systems such as a rotary kiln, a fluidized layer furnace, a fixed layer furnace, and a mobile layer furnace, and any of a continuous furnace in which charging of a raw material and ejection of a product are continuously performed and a batch furnace in which these are intermittently performed can be used. The activation apparatus is preferably a rotary kiln or a fixed layer furnace because the gas introduction direction can be easily switched. A batch furnace is preferred from the viewpoint of uniformity of the degree of activation because a distribution occurs in the degree of activation in a continuous furnace in which a raw material is continuously charged.

The introduction direction of the activation gas is preferably changed in the activation apparatus in which activation of the raw material carbon black in the first activation step and the second activation step (in particular, the first activation step) is performed. In a case in which the gas introduction direction is changed, the entrance and exit of a gas flow path may be interchanged, or a furnace core tube may be reversed in direction and connected in the case of use of a tubular furnace as the activation apparatus.

The proportion of the amount of feeding of the gas flowing from the initial gas introduction direction at the end of activation can be indicated by Gas R ("Amount of feeding from initial gas introduction direction/(Amount of feeding from initial gas introduction direction + Amount of feeding from gas introduction direction reversed from initial)" × 100. The value of Gas R is preferably from 30 to 70%. In a case in which the value of Gas R is 70% or more, the degree of activation of raw material carbon black present on the gas introduction side excessively increases, and thus activation uniformity is impaired. In this regard, in a case in which the value of Gas R is 30% or less, the degree of activation of raw material carbon black present on the initial gas discharge side excessively increases, and thus uniformity of the degree of activation is impaired.

### <Catalyst Layer for Solid Polymer Fuel Cell and Solid Polymer Fuel Cell>

A solid polymer fuel cell is described together with the catalyst layer for a solid polymer fuel cell of the disclosure.

The carbon material of the disclosure can be applied to, for example, catalyst layers 150 and 160 provided in a solid polymer fuel cell 100 illustrated in FIG. 1. FIG. 1 is a schematic view illustrating one example of an outline configuration of the fuel cell of the disclosure.

The solid polymer fuel cell 100 illustrated in FIG. 1 includes separators 110 and 120, gas diffusion layers 130 and 140, catalyst layers 150 and 160, and an electrolyte membrane 170.

The separator 110 is a separator on the anode side, and introduces a reducing gas such as hydrogen to the gas diffusion layer 130. The separator 120 is a separator on the cathode side, and introduces an oxidizing gas such as an oxygen gas or air to a gas diffusion aggregation phase. The separators 110 and 120 are not particularly limited in terms of type as long as these are each a separator used for a conventional fuel cell (for example, solid polymer fuel cell).

The gas diffusion layer 130 is a gas diffusion layer on the anode side, and diffuses the reducing gas supplied from the separator 110 and then supplies the reducing gas to the catalyst layer 150. The gas diffusion layer 140 is a gas diffusion layer on the cathode side, and diffuses the oxidizing gas supplied from the separator 120 and then supplies the oxidizing gas to the catalyst layer 160. The gas diffusion layers 130 and 140 are not particularly limited in terms of type as long as these are each a gas diffusion layer used for a conventional fuel cell (for example, solid polymer fuel cell). Examples of the gas diffusion layers 130 and 140 include porous carbon materials (carbon cloth, carbon paper, and the like) and porous metal materials (metal mesh, metal wool, and the like). Preferred examples of the gas diffusion layers 130 and 140 include a gas diffusion layer of a two-layered structure. Specific examples include a gas diffusion layer of a two-layered structure in which a layer located on each of the separators 110 and 120 sides is a gas-diffusive fiber layer with a fibrous carbon material as a main component and a layer located on each of the catalyst layers 150 and 160 sides is a microporous layer with carbon black as a main component, in each of the gas diffusion layers 130 and 140.

The catalyst layer 150 is a so-called anode. An oxidation reaction of a reducing gas occurs to generate a proton and an electron in the catalyst layer 150. For example, in a case in which the reducing gas is a hydrogen gas, the following oxidation reaction occurs.

H₂ → 2H⁺ + 2e⁻ (E₀ = 0 V)

Protons generated by the oxidation reaction pass through the catalyst layer 150 and the electrolyte membrane 170, and reach the catalyst layer 160. Electrons generated by the oxidation reaction pass through the catalyst layer 150, the gas diffusion layer 130, and the separator 110, and reach an external circuit. The electrons work (generate electricity) in the external circuit, and then are introduced to the separator 120. Thereafter, the electrons pass through the separator 120 and the gas diffusion layer 140, and reach the catalyst layer 160.

The configuration of the catalyst layer 150 serving as the anode is not particularly restricted. The configuration of the catalyst layer 150 may be the same as that of a conventional anode, may be the same as that of the catalyst layer 160, or may be a configuration higher in affinity than that of the catalyst layer 160.

The catalyst layer 160 is a so-called cathode. A reduction reaction of an oxidizing gas occurs to generate water in the catalyst layer 160. For example, in a case in which the oxidizing gas is an oxygen gas or air, the following reduction reaction occurs. Water generated in the oxidation reaction is discharged to the outside of the solid polymer fuel cell 100, together with the unreacted oxidizing gas.

O₂+ 4H⁺ + 4e⁻ → 2H₂O (E₀ = 1.23 V)

Thus, the solid polymer fuel cell 100 generates electricity by use of the difference in energy (difference in potential) between the oxidation reaction and the reduction reaction. In other words, the electrons generated in the oxidation reaction work in the external circuit.

The catalyst layer 160 includes the carbon material for a catalyst carrier of the disclosure. In other words, the catalyst layer 160 includes the carbon material for a catalyst carrier of the disclosure, an electrolyte material (ionomer), and a catalyst component (platinum or the like). Thus, the catalyst layer 160 can be enhanced in durability and low-load characteristics. The solid polymer fuel cell 100 can be then enhanced in durability and low-load characteristics.

The catalyst carrying rate in the catalyst layer 160 is not particularly restricted, and is preferably from 30% by mass to less than 80% by mass. In a case in which the catalyst carrying rate is in this range, durability and low-load characteristics are further enhanced. The catalyst carrying rate is here represented by the percentage by mass of a catalyst component with respect to the total mass of a catalyst-carrying particle (particle in which the catalyst component is carried on the carbon material for a catalyst carrier). In a case in which the catalyst carrying rate is less than 30% by mass, a need for thickening the catalyst layer 160 can occur so that the solid polymer fuel cell 100 can withstand practical use. In this regard, in a case in which the catalyst carrying rate is 80% by mass or more, catalyst aggregation easily occurs. The catalyst layer 160, which is too thin, can give rise to the possibility of flooding.

The mass ratio I/C between the mass I of the electrolyte material and the mass C of the carbon material for a catalyst carrier in the catalyst layer 160 is not particularly restricted, and is preferably from more than 0.5 to less than 5.0. In this case, both a pore network and an electrolyte material network can be achieved, and durability and low-load characteristics are enhanced. In this regard, in a case in which the mass ratio I/C is 0.5 or less, the electrolyte material network is weak to result in a tendency to enhance proton conduction resistance. In a case in which the mass ratio I/C is 5.0 or more, the pore network can be divided by the electrolyte material. In each case, durability and low-load characteristics can decrease.

The thickness of the catalyst layer 160 is not particularly restricted, and is preferably from more than 5 µm to less than 20 µm. In this case, the oxidizing gas easily diffuses and flooding hardly occurs in the catalyst layer 160. In a case in which the thickness of the catalyst layer 160 is 5 µm or less, flooding easily occurs. In a case in which the thickness of the catalyst layer 160 is 20 µm or more, the oxidizing gas hardly diffuses in the catalyst layer 160, and the catalyst component near the electrolyte membrane 170 hardly moves. In other words, the rate of catalyst utilization can decrease.

The electrolyte membrane 170 is constituted from an electrolyte material having proton conductivity. The electrolyte membrane 170 allows protons generated in the oxidation reaction to be introduced to the catalyst layer 160 (cathode). The electrolyte material is not particularly limited in terms of type as long as it is an electrolyte material used for conventional fuel batteries, for example, solid polymer fuel batteries. Suitable examples of the electrolyte material include an electrolytic resin. Examples of the electrolytic resin include a polymer into which a phosphoric acid group, a sulfonic acid group, or the like is introduced. Specific examples include a perfluorosulfonic acid polymer, and a polymer into which benzenesulfonic acid or the like is introduced. Of course, the electrolyte material may also be any other electrolyte material. Examples of such an electrolyte material include inorganic, and inorganic-organic hybrid electrolyte materials. The solid polymer fuel cell 100 may also be a fuel cell to be operated in a range of from ordinary temperature (25°C) to 150°C.

### <Method of Producing Solid Polymer Fuel Cell>

The method of producing the solid polymer fuel cell 100 is not particularly restricted as long as it is the same production method as conventional one. However, the carbon material for a catalyst carrier of the disclosure is used for the catalyst carrier. The carbon material for a catalyst carrier of the disclosure is preferably used for the catalyst carrier at least in the catalyst layer 160 serving as a cathode, of the catalyst layers 150 and 160. Of course, the carbon material for a catalyst carrier of the disclosure may also be used in each of both the catalyst layers including the catalyst layer 150 serving as an anode and the catalyst layer 160 serving as a cathode.

### Examples

Experiment Examples of the carbon material for a catalyst carrier of the disclosure are described. First, the method of measuring each parameter is described.

### <Method of Measuring each Parameter>

### (Measurement of Nitrogen Adsorption/Desorption Isotherm (VA₂₀, VD₅₋₂₀, BET Specific Surface Area))

About 30 mg of a specimen of the carbon material for a catalyst carrier was weighed and taken, and dried in vacuum at 200°C for 2 hours, and thereafter a nitrogen adsorption/desorption isotherm was measured with an automatic specific surface area measurement apparatus (AUTOSORB iQ manufactured by Anton Paar Japan) by use of a nitrogen gas as an adsorbate.

The volume VA₂₀ of a pore having a pore size of 20 nm or less and the volume VD₅₋₂₀ of a pore having a pore size of from 5 to 20 nm were each calculated by analysis of the nitrogen adsorption/desorption isotherm by a DH method with software attached to the apparatus.

The BET specific surface area was calculated by BET analysis of the nitrogen adsorption isotherm in a range of relative pressure P/P₀ of 0.30 or less.

### (Measurement of Temperature Td_{10%} at Reduction in Weight of 10% in Thermogravimetry-Differential Thermal Analysis (TG-DTA))

The carbon material for a catalyst carrier was formed into a specimen, and about 6 mg of the specimen was weighed and taken. Thereafter, the specimen was set in a thermogravimetry-differential thermal analyzer (EXSTAR TG/DTA7200 manufactured by Hitachi High-Technologies Corporation), and the weight reduction up to 900°C at a rate of temperature rise of 10°C/min under flowing of dry air at 200 mL/min was measured. The temperature at a weight reduction of 10% under the assumption that the weight at the start of measurement of the resulting weight reduction curve was 100% and the weight at the end of the measurement was 0% was defined as the temperature Td_{10%} at a reduction in weight of 10%.

### <Examples: Production of Carbon Material for Catalyst Carrier>

### (Example 1)

### (1) First Activation Step

A tube-type reactor having a diameter of 1 inch was filled with 7 g of NITERON #10 manufactured by NIPPON STEEL Carbon Co., Ltd., as raw material carbon black, and a CO₂ gas at 400 Nml/min. was allowed to flow with a mass flow controller located upstream of the tube-type reactor. The tube-type reactor in this state was heated to 840°C at 20°C/min., and retained at 840°C for 36 hours, thereafter valves disposed upstream and downstream of tube-type reactor were respectively operated, and the direction of the gas introduced to the tube-type reactor was reversed and furthermore retained at 840°C for 36 hours, thereby performing the first activation step. After retention, the flowing gas was switched to N₂, the temperature was dropped, and a first activation sample was recovered.

### (2) Heating Treatment Step

A heating crucible was filled with the total amount of the first activation sample recovered, the temperature was raised at 15°C/min. in a heating furnace under flowing of Ar, the heating treatment step was performed at 1600°C for 1 hour, and a heat-treated sample was recovered.

### (3) Second Activation Step

The tube-type reactor having a diameter of 1 inch was again filled with the total amount of the heat-treated sample, and a CO₂ gas at 400 Nml/min. was allowed to flow with the mass flow controller located upstream of the tube-type reactor. The tube-type reactor in this state was heated to 850°C at 20°C/min., and retained at 850°C for 15 minutes. Thereafter, the valves disposed upstream and downstream of the tube-type reactor were respectively operated, and the direction of the gas introduced to the tube-type reactor was reversed and furthermore retained at 850°C for 15 minutes, thereby performing second activation. After retention, the flowing gas was switched to N₂, and the temperature was dropped.

The second activation sample obtained by these operations was recovered as a carbon material for a catalyst carrier (namely, porous activated carbon black) of Example 1.

### (Example 2)

A carbon material for a catalyst carrier (namely, porous activated carbon black) was obtained in the same manner as in Example 1 except that the retention temperature in the heating treatment step was set to 1800°C.

### (Example 3)

A carbon material for a catalyst carrier (namely, porous activated carbon black) was obtained in the same manner as in Example 1 except that, in the first activation step, the tube-type reactor was heated and then retained at 840°C for 24 hours, thereafter the valves disposed upstream and downstream of the tube-type reactor were respectively operated, and the direction of the gas introduced to the tube-type reactor was reversed and furthermore retained at 840°C for 48 hours.

### (Example 4)

A carbon material for a catalyst carrier (namely, porous activated carbon black) was obtained in the same manner as in Example 1 except that, in the first activation step, the tube-type reactor was heated to 820°C at 20°C/min. and retained at 820°C for 36 hours, thereafter the valves disposed upstream and downstream of the tube-type reactor were respectively operated, and the direction of the gas introduced to the tube-type reactor was reversed and furthermore retained at 820°C for 36 hours.

### (Example 5)

A carbon material for a catalyst carrier (namely, porous activated carbon black) was obtained in the same manner as in Example 1 except that, in the first activation step, the tube-type reactor was heated to 820°C at 20°C/min. and retained at 820°C for 36 hours, thereafter the valves disposed upstream and downstream of the tube-type reactor were respectively operated, and the direction of the gas introduced to the tube-type reactor was reversed and furthermore retained at 820°C for 36 hours, and
the retention time was 2 hours (2 hours in total of a retention time of 1 hour before and after reversal in gas direction reversal) in the second activation step.

### (Example 6)

A carbon material for a catalyst carrier (namely, porous activated carbon black) was obtained in the same manner as in Example 1 except that, in the first activation step, NITERON #3350 manufactured by NIPPON STEEL Carbon Co., Ltd. was used for the raw material carbon black, the tube-type reactor was heated to 1000°C at 20°C/min., and retained at 3 hours for 1000°C, thereafter the valves disposed upstream and downstream of the tube-type reactor were respectively operated, and the direction of the gas introduced to the tube-type reactor was reversed and furthermore retained at 1000°C for 3 hours,
the retention temperature in the heating treatment step was changed to 1700°C, and
the retention temperature was 950°C and the retention time was 4 hours (4 hours in total of a retention time of 2 hours before and after reversal in gas direction reversal) in the second activation step.

### (Example 7)

A carbon material for a catalyst carrier (namely, porous activated carbon black) was obtained in the same manner as in Example 1 except that, in the first activation step, NITERON #3350 manufactured by NIPPON STEEL Carbon Co., Ltd. was used for the raw material carbon black, the tube-type reactor was heated to 1000°C at 20°C/min., and retained at 3 hours for 1000°C, thereafter the valves disposed upstream and downstream of the tube-type reactor were respectively operated, and the direction of the gas introduced to the tube-type reactor was reversed and furthermore retained at 1000°C for 3 hours,
the retention temperature in the heating treatment step was changed to 1700°C, and
the retention temperature was 950°C and the retention time was 2 hours (2 hours in total of a retention time of 1 hour before and after reversal in gas direction reversal) in the second activation step.

### (Example 8)

In the first activation step, a cylindrical retort container provided with four lifters and having an inner diameter of 120 nm and a length of 500 mm was filled with 230 g of NITERON #10 manufactured by NIPPON STEEL Carbon Co., Ltd., as raw material carbon black, so that a uniform thickness was achieved, the retort container was disposed inside of a rotary kiln, a CO₂ gas was allowed to flow at a flow rate of 3000 Nml/min., and the rotary kiln was rotated at a speed of one rotation per second. The rotary kiln in this state was heated to 850°C at 20°C/min., and retained at 850°C for 35 hours. After retention, the flowing gas was switched to N₂, the temperature was dropped, the retort container was taken out from the rotary kiln, and the retort container was again disposed in the rotary kiln with reversal of the back and forth thereof. Thereafter, a CO₂ gas was allowed to flow at a flow rate of 3000 Nml/min., and the rotary kiln was rotated at a speed of one rotation per second. The rotary kiln in this state was heated to 850°C at 20°C/min., and furthermore retained at 850°C for 35 hours. After retention, the flowing gas was switched to N₂, the temperature was dropped, and a first activation sample was recovered.

The retention temperature was 950°C and the retention time was 0.5 hours (0.5 hours in total of a retention time of 15 minutes before and after reversal in gas direction reversal) in the second activation step.

The same manner was performed as in Example 1 except that these operations were carried out.

### (Comparative Example 1)

A carbon material for a catalyst carrier was obtained in the same manner as in Example 1 except that the direction of the gas introduced to the tube-type reactor was not reversed in the first activation step.

### (Comparative Example 2))

A carbon material for a catalyst carrier was obtained in the same manner as in Example 8 except that the retort container was taken out from the rotary kiln and reversal of the back and forth thereof was not performed in the first activation step.

### (Comparative Example 3)

A carbon material for a catalyst carrier was obtained in the same manner as in Example 8 except that the retention time before reversal of the retort container was 56 hours and the retention time after reversal of the retort container was 14 hours in the first activation step.

### (Comparative Example 4)

A carbon material for a catalyst carrier was obtained in the same manner as in Example 8 except that the retention time before reversal of the retort container was 14 hours and the retention time after reversal of the retort container was 56 hours in the first activation step.

### (Comparative Example 5)

A carbon material for a catalyst carrier was obtained in the same manner as in Example 1 except that the second activation step was not performed.

### (Comparative Example 6)

A carbon material for a catalyst carrier was obtained in the same manner as in Example 1 except that the retention temperature in the heating treatment step was set to 1400°C.

### (Comparative Example 7)

A carbon material for a catalyst carrier was obtained in the same manner as in Example 1 except that the retention temperature in the heating treatment step was set to 1200°C.

### (Comparative Example 8)

A carbon material for a catalyst carrier was obtained in the same manner as in Example 1 except that the retention temperature in the heating treatment step was set to 2000°C.

### (Comparative Example 9)

Ketjen black EC300J of Lion Specialty Chemicals Co., Ltd., in which additional treatment was not carried out, was adopted as a carbon material for a catalyst carrier of Comparative Example 9.

### (Comparative Example 10)

Ketjen black EC600JD of Lion Specialty Chemicals Co., Ltd., in which additional treatment was not carried out, was adopted as a carbon material for a catalyst carrier of Comparative Example 10.

### (Comparative Example 11)

The heating treatment step of 2 g of Ketjen black EC300J of Lion Specialty Chemicals Co., Ltd., as the raw material carbon black, was carried out in a heating treatment furnace under flowing of Ar at 1600°C for 1 hour, thereby obtaining a carbon material for a catalyst carrier of Comparative Example 11.

### (Comparative Example 12)

The heating treatment step of 2 g of Ketjen black EC600JD of Lion Specialty Chemicals Co., Ltd., as the raw material carbon black, was carried out in a heating treatment furnace under flowing of Ar at 1600°C for 1 hour, thereby obtaining a carbon material for a catalyst carrier of Comparative Example 12.

### <Preparation of Catalyst, Preparation of Catalyst Layer, Production of MEA, Assembling of Fuel Cell, and Evaluation of Cell Performance (Electricity Generation Performance, Durability)>

Next, each porous carbon black prepared as above was used to prepare a catalyst for a solid polymer fuel cell, on which a catalytic metal was carried, as follows, the catalyst obtained was used to prepare a catalyst layer ink liquid, then the catalyst layer ink liquid was used to form a catalyst layer, furthermore the catalyst layer formed was used to produce a membrane electrode assembly (MEA), the MEA produced was incorporated into a cell of a fuel cell, and an electricity generation test was performed with a fuel cell measurement apparatus. Hereinafter, preparation of each member and cell evaluation with the electricity generation test are described in detail.

### (1) Preparation of Catalyst (Platinum Carry Carbon Material) for Solid Polymer Fuel Cell

The carbon material for a catalyst carrier of each Example was dispersed in distilled water, formaldehyde was added to this dispersion liquid, the resultant was put in a water bath set to 40°C, and, once the temperature of the dispersion liquid reached the same temperature as that of the bath, 40°C, an aqueous nitric acid solution of a dinitrodiamine Pt complex was slowly poured into this dispersion liquid with stirring. Thereafter, stirring was continued for about 2 hours, thereafter filtration was performed, and the resulting solid was washed. The solid thus obtained was dried in vacuum at 90°C, then pulverized with a mortar, and then heat-treated in an argon atmosphere containing 5% by volume of hydrogen at 200°C for 1 hour, thereby producing a platinum-carried carbon material. The amount of platinum carried in the platinum-carried carbon material was adjusted to 35% by mass with respect to the total mass of the carbon material for a catalyst carrier and such a platinum particle, and was confirmed by measurement by inductively coupled plasma-atomic emission spectrometry (ICP-AES).

### (2) Preparation of Catalyst Layer

The platinum-carried carbon material (Pt catalyst) prepared as above was used, a 5% by mass Nafion solution (DE2020CS, (registered trademark): Nafion, manufactured by Du Pont) was used as an electrolytic resin, such Pt catalyst and Nafion were blended under an Ar atmosphere at a proportion of the mass of the Nafion solid content with respect to the mass of the porous carbon black content (the mass of only porous carbon black except for the Pt content in the Pt catalyst), of 1.0 time, and lightly stirred, thereafter the Pt catalyst was disintegrated with ultrasound, and ethanol was further added for adjustment so that the solid content concentration of the total thereof combined with the Pt catalyst and the electrolytic resin was 0.5% by mass, thereby preparing a catalyst layer ink liquid in which the Pt catalyst and the electrolytic resin were mixed.

The catalyst layer ink liquid thus prepared was used, spray conditions were regulated so that the mass per catalyst layer unit area of platinum (hereinafter, referred to as "basis weight of platinum") was 0.2 mg/cm2, the catalyst layer ink was sprayed on a Teflon ((registered trademark)) sheet, and then drying treatment at 120°C for 60 minutes in argon was performed, thereby producing a catalyst layer.

### (3) Production of MEA

The catalyst layer produced as above was used, and a MEA (membrane electrode composite) was produced by the following method.

A 6-cm-square-shaped electrolyte membrane was cut out from a Nafion membrane (NR211 manufactured by Du Pont). Respective catalyst layers on the anode and the cathode applied to the Teflon (registered trademark) sheet were cut out into a 2.5-cm-square shape with a cutter knife.

The electrolyte membrane was sandwiched between the respective catalyst layers on the thus cut out anode and cathode so that the respective catalyst layers not only were contacted with the central portion of the electrolyte membrane being interposed therebetween, but also were not mutually misaligned, the resultant was pressed at 120°C and 100 kg/cm2 for 10 minutes and then cooled to room temperature, and thereafter only the Teflon ((registered trademark)) sheet was carefully released from each of the anode and the cathode, thereby preparing a catalyst layer-electrolyte membrane assembly in which the respective catalyst layers on the anode and the cathode were fixed to the electrolyte membrane.

Next, paired sheets of square-shaped carbon paper were cut out as gas diffusion layers at a 2.5-cm square size from carbon paper (39BC manufactured by SGL Carbon AG), the catalyst layer-electrolyte membrane assembly was sandwiched between these sheets of carbon paper so that the respective catalyst layers on the anode and the cathode were matched and not misaligned, and the resultant was pressed at 120°C and 50 kg/cm² for 10 minutes, thereby producing a MEA.

The basis weights of the catalytic metal component, each component in the carbon material and the electrolyte material in such each MEA produced were each obtained by determining the mass of the catalyst layer fixed to the Nafion membrane (electrolyte membrane) from the difference between the mass of the catalyst layer-attached Teflon (registered trademark) sheet before pressing and the mass of the Teflon ((registered trademark)) sheet released after pressing, and calculating the mass ratio in the composition of the catalyst layer.

### (4) Assembling of Fuel Cell, and Initial Electricity Generation Performance Evaluation

The MEA produced with the porous carbon material according to each of Examples and Comparative Examples was incorporated into each cell, and put in a fuel cell measurement apparatus, and initial electricity generation performance evaluation of a fuel cell was performed by the following procedure.

Air was fed to the cathode and pure hydrogen was fed to the anode so that the respective gauge pressures as the back pressures were each 0.1 MPaG by pressure regulation with a back pressure valve provided downstream of the cell so that the respective rates of utilization were 40% and 70%. The cell temperature was set to 80°C, and air and pure hydrogen to be fed to a fuel a cell of a fuel cell were each allowed to pass in distilled water warmed at 80°C in a humidifier (namely, bubbling was performed), and thus humidified. Thus, the relative humidities of the anode and the cathode were each about 100%.

An operation for gradually increasing the current density until the voltage between cell terminals reached 0.3 V under a condition in which a reaction gas was fed to the cell under the above setting was repeated 10 times.

Thereafter, the voltage between cell terminals in retention at the current density fixed to 0.2 A/cm² for 10 minutes was recorded, and low-load performance evaluation was performed according to the following criteria of Pass Ranks A and B and Fail Rank C. The results are shown in Table 1.

### [Pass Rank]

A: One in which the voltage between cell terminals at a current density of 0.2 A/cm² is 0.83 V or more.
B: One in which the voltage between cell terminals at a current density of 0.2 A/cm² is 0.81 V or more.

### [Fail Rank]

C: One less than Pass Rank B.

### (5) Evaluation of Durability

After the above initial electricity generation performance evaluation, a duration test was performed in the following conditions. First, the cell temperature was set to 80°C, the relative humidity was set to 100%, the cell back pressure was set to 0.0 MPaG, and the gas of the cathode was switched to an argon gas. Next, a cycle in which an operation of retention at a cell voltage of 0.6 V for 4 seconds was performed and then an operation of retention at a cell voltage of 1.2 V for 4 seconds was defined as one cycle, and this repetition operation of the variation in voltage in a rectangular wave manner was carried out for 1000 cycles. Thereafter, the respective rates of gas utilization were set to 40% and 70%, the respective gauge pressures as the cell back pressures were each 0.1 MPaG, the respective cell temperatures were each 80°C, and the respective relative humidities were each 100% in the anode and the cathode, the current density at a cell voltage of 0.3 V was recorded, and durability evaluation was performed according to the following criteria of Pass Ranks A and B and Fail Rank C. The results are shown in Table 1.

### [Pass Rank]

A: One in which the current density after 1000 cycles carried out is 80% or more with respect to the current density in the initial electricity generation performance evaluation.
B: One in which the current density after 1000 cycles carried out is 70% or more with respect to the current density in the initial electricity generation performance evaluation.

### [Fail Rank]

C: One less than Pass Rank B.

**[Table 1]**

| Table 1-1 | | | | | | | | |
|---|---|---|---|---|---|---|---|---|
| Example -Comparative Example | First activation step | | | | Heating treatment step | Second activation step | | |
| | Gas type | Temperature | Time | Gas R | Temperature | Gas type | Temperature | Time |
| | | °C | h | % | °C | | °C | h |
| Example 1 | CO2 | 840 | 72 | 50 | 1600 | CO2 | 850 | 0.5 |
| Example 2 | CO2 | 840 | 72 | 50 | 1800 | CO2 | 850 | 0.5 |
| Example 3 | CO2 | 840 | 72 | 67 | 1600 | CO2 | 850 | 0.5 |
| Example 4 | CO2 | 820 | 72 | 50 | 1600 | CO2 | 850 | 0.5 |
| Example 5 | CO2 | 820 | 72 | 50 | 1600 | CO2 | 850 | 2 |
| Example 6 | CO2 | 1000 | 6 | 50 | 1700 | CO2 | 950 | 4 |
| Example 7 | CO2 | 1000 | 6 | 50 | 1700 | CO2 | 950 | 2 |
| Example 8 | CO2 | 850 | 70 | 50 | 1600 | CO2 | 950 | 0.5 |
| Comparative Example 1 | CO2 | 840 | 72 | 0 | 1600 | CO2 | 850 | 0.5 |
| Comparative Example 2 | CO2 | 850 | 70 | 0 | 1600 | CO2 | 950 | 0.5 |
| Comparative Example 3 | CO2 | 850 | 70 | 80 | 1600 | CO2 | 950 | 0.5 |
| Comparative Example 4 | CO2 | 850 | 70 | 20 | 1600 | CO2 | 950 | 0.5 |
| Comparative Example 5 | CO2 | 840 | 72 | 50 | 1600 | - | - | - |
| Comparative Example 6 | CO2 | 840 | 72 | 50 | 1400 | CO2 | 850 | 0.5 |
| Comparative Example 7 | CO2 | 840 | 72 | 50 | 1200 | CO2 | 850 | 0.5 |
| Comparative Example 8 | CO2 | 840 | 72 | 50 | 2000 | CO2 | 850 | 0.5 |
| Comparative Example 9 | - | - | - | - | - | - | - | - |
| Comparative Example 10 | - | - | - | - | - | - | - | - |
| Comparative Example 11 | - | - | - | - | 1600 | - | - | - |
| Comparative Example 12 | - | - | - | - | 1600 | - | - | - |

**[Table 2]**

| Table 1-2 | | | | | | | |
|---|---|---|---|---|---|---|---|
| Example -Comparative Example | Carbon material for catalyst carrier | | | | | Evaluation results | |
| | BET specific surface area | VA20 | VD5-20 | VD5-20/VA20 | Td10% | Low-load performance | Durability |
| | m2/g | mL/g | mL/g | | °C | | |
| Example 1 | 410 | 0.39 | 0.09 | 0.22 | 625 | A | B |
| Example 2 | 380 | 0.42 | 0.09 | 0.21 | 661 | A | A |
| Example 3 | 400 | 0.39 | 0.11 | 0.28 | 632 | A | B |
| Example 4 | 470 | 0.39 | 0.09 | 0.23 | 629 | A | B |
| Example 5 | 530 | 0.41 | 0.09 | 0.22 | 628 | A | B |
| Example 6 | 610 | 0.61 | 0.17 | 0.28 | 642 | A | A |
| Example 7 | 500 | 0.53 | 0.16 | 0.31 | 645 | B | A |
| Example 8 | 720 | 0.55 | 0.18 | 0.33 | 625 | B | B |
| Comparative Example 1 | 380 | 0.39 | 0.14 | 0.36 | 625 | C | B |
| Comparative Example 2 | 680 | 0.59 | 0.25 | 0.43 | 638 | C | B |
| Comparative Example 3 | 690 | 0.56 | 0.21 | 0.38 | 635 | C | B |
| Comparative Example 4 | 710 | 0.54 | 0.20 | 0.37 | 631 | C | B |
| Comparative Example 5 | 320 | 0.35 | 0.14 | 0.39 | 629 | C | B |
| Comparative Example 6 | 520 | 0.44 | 0.09 | 0.20 | 612 | B | C |
| Comparative Example 7 | 580 | 0.46 | 0.10 | 0.22 | 612 | B | C |
| Comparative Example 8 | 290 | 0.32 | 0.08 | 0.25 | 683 | C | A |
| Comparative Example 9 | 800 | 0.53 | 0.18 | 0.35 | 611 | B | C |
| Comparative Example 10 | 1290 | 1.26 | 0.52 | 0.41 | 597 | C | C |
| Comparative Example 11 | 250 | 0.28 | 0.18 | 0.63 | 701 | C | A |
| Comparative Example 12 | 680 | 0.91 | 0.46 | 0.50 | 687 | C | A |

As clear from the above results that the carbon material for a catalyst carrier (namely, porous activated carbon black) of each Example can achieve both high durability and low-load characteristics.

The description of reference signs is as follows.
- 100: solid polymer fuel cell
- 110, 120: separator
- 130, 140: gas diffusion layer
- 150, 160: catalyst layer
- 170: electrolyte membrane

The disclosure of Japanese Patent Application No. 2023-108951 is herein incorporated by reference in its entirety.

All documents, patent applications, and technical standards described herein are herein incorporated by reference, as if each individual document, patent application, and technical standard were specifically and individually indicated to be incorporated by reference.

## Claims

1. A carbon material for a catalyst carrier of a solid polymer fuel cell, the carbon material comprising porous activated carbon black satisfying the following requirements (A), (B), and (C):
(A) a BET specific surface area is from 350 m²/g to 800 m²/g,
(B) a value (VD₅₋₂₀/VA₂₀) obtained by dividing a pore volume VD₅₋₂₀ exhibited by a pore having a pore size of from 5 nm to 20 nm, as determined by analysis of a nitrogen desorption isotherm with a DH (Dollimore-Heal) method, by a pore volume VA₂₀ exhibited by a pore having a pore size of 20 nm or less, as determined by analysis of a nitrogen adsorption isotherm with a DH (Dollimore-Heal) method, is 0.35 or less, and
(C) a temperature Td_{10%} at a reduction in weight of 10% in temperature rise at 10°C/min in an air atmosphere in thermogravimetry-differential thermal analysis (TG-DTA) is from 620 to 680°C.

2. The carbon material for a catalyst carrier of a solid polymer fuel cell according to claim 1, wherein the pore volume VA₂₀ is from 0.36 to 0.90 mL/g.

3. A catalyst layer for a solid polymer fuel cell, the catalyst layer comprising the carbon material for a catalyst carrier of a solid polymer fuel cell according to claim 1 or claim 2.

4. A fuel cell comprising the catalyst layer for a solid polymer fuel cell according to claim 3.

5. The fuel cell according to claim 4, wherein the catalyst layer for a solid polymer fuel cell is a catalyst layer on a cathode side.
